Europäisches Patentamt

European Patent Office

Office européen des brevets

(19)

(11) Veröffentlichungsnummer : **0 090 257**
**B1**

(12) **EUROPÄISCHE PATENTSCHRIFT**

(45) Veröffentlichungstag der Patentschrift :
23.11.89

(21) Anmeldenummer : 83102588.7

(22) Anmeldetag : 16.03.83

(51) Int. Cl.⁴ : **B 29 B   7/34**

(54) Mischvorrichtung für die Herstellung eines chemisch reaktionsfähigen Gemisches aus mindestens zwei flüssigen Kunststoffkomponenten.

(30) Priorität : 25.03.82 DE 3210978

(43) Veröffentlichungstag der Anmeldung :
05.10.83 Patentblatt 83/40

(45) Bekanntmachung des Hinweises auf die Patenterteilung : 23.11.89 Patentblatt 89/47

(84) Benannte Vertragsstaaten :
BE CH DE FR GB IT LI NL SE

(56) Entgegenhaltungen :
EP--A-- 0 017 041
EP--A-- 0 037 523
US--A-- 3 676 035

(73) Patentinhaber : BASF Aktiengesellschaft
Carl-Bosch-Strasse 38
D-6700 Ludwigshafen (DE)

(72) Erfinder : Thiele, Heino, Dr.
An der Froschlache 23
D-6700 Ludwigshafen (DE)
Erfinder : Weber, Werner, Dr.
Stresemannstrasse 10
D-6800 Mannheim 1 (DE)
Erfinder : Zettler, Hans Dieter
Bueckelhaube 35
D-6718 Gruenstadt (DE)
Erfinder : Schlueter, Klaus
Windeckstrasse 1c
D-8000 Muenchen 70 (DE)
Erfinder : Wallner, Josef
Brauneckstrasse 2
D-8150 Holzkirchen (DE)
Erfinder : Seid, Bernhard
Albrecht-Duerer-Ring 28
D-6710 Frankenthal (DE)

EP 0 090 257 B1

## Beschreibung

Die Erfindung bezieht sich auf eine Mischvorrichtung für die Herstellung eines chemisch reaktionsfähigen Gemisches aus mindestens zwei flüssigen Kunststoffkomponenten mit einer Mischkammer, die Eintrittsöffnungen für die einzelnen Komponenten und eine Austrittsöffnung für das Komponentengemisch besitzt, sowie mit einem Steuerorgan, das zwischen einer die Eintrittsöffnungen offenlassenden Stellung und einer die Eintrittsöffnungen zur Mischkammer absperrenden Stellung hin- und herbewegbar ist, wobei das Steuerorgan als ein einen unabhängig steuerbaren Ausstoßkolben enthaltender Hohlkolben ausgebildet ist, dessen der Mischkammer zugekehrte Stirnfläche die der Austrittsöffnung gegenüberliegende Mischkammerwand bildet, wobei sich an die Austrittsöffnung ein Auslaufrohr mit gegenüber dem Mischkammerquerschnitt geringerem Querschnitt anschließt, durch das der mit gleichem Querschnitt ausgebildete Ausstoßkolben hindurchbewegbar ist.

Bei bekannten Mischvorrichtungen der vorstehend genannten Art dient der Ausstoßkolben als Reinigungskolben für die Austrittsöffnung und das Auslaufrohr (DE-A-25 50 334) oder zur Drosselung des Zulaufs des Komponentengemischs zur Austrittsöffnung (DE-A-28 15 460). Mit solchen Mischvorrichtungen können in vielen Fällen ausreichende Mischergebnisse erzielt werden, da die Austrittsöffnung einen geringeren Querschnitt als die Mischkammer aufweist, wodurch das Mischergebnis positiv beeinfluß wird. Wenn höhere Anforderungen an die Mischqualität gestellt werden, d. h. wenn beispielsweise in offene Formen eingefüllt werden soll — dieses erfolgt überwiegend mit Mischvorrichtungen mit einem mechanischen Rührer, die im Niederdruckbereich arbeiten — dann ist das Mischergebnis häufig nicht ausreichend.

Eine Mischvorrichtung, bei der die Mischung mechanisch durch einen Rührer durchgeführt wird, ist aus US-A-3 676 035 bekannt. Die zu mischenden bzw. zu verarbeitenden Kunststoffe, im allgemeinen Thermoplaste, wie Polyvinylchlorid, werden der einen Rotor enthaltenden Mischkammer durch eine Förderschnecke zugeführt. Der Rotor ist axial verschiebbar und weist einen zentralen Kolben auf, welcher durch die Austrittsöffnung der Mischkammer in einen sich daran anschließenden Zylinder bewegbar ist. Für die Verarbeitung von Mehrkomponentenkunststoffen ist diese Mischvorrichtung jedoch nicht geeignet, da der Rotor nach kürzester Zeit durch aushärtendes Komponentengemisch blockiert wäre. Es müßte somit die Mischkammer regelmäßig durch Spülmittel und/oder Preßluft gereinigt und der Rotor in mehr oder weniger großen Zeitabständen aus der Mischvorrichtung für eine vollständige, gegebenenfalls mechanische Reinigung, ausgebaut werden.

Weiterhin ist es aus der EP-A-0 017 041 bekannt, fließfähige Reaktionskomponenten miteinander zu vermischen, wobei das Komponentengemisch in einem von zwei Leittellern gebildeten Spalt einem Schergefälle ausgesetzt wird. Dabei ist der eine Leitteller mit einem eine Vormischkammer enthaltenden Hohlkolben und der andere Leitteller mit einem Formwerkzeug verbunden. Die Leitteller sind gegeneinander verschiebbar und begrenzen zwischen sich eine sog. Nachmischkammer, d. h. um eine einwandfreie Gemischqualität erreichen zu können, wird in den Scherspalt bzw. die Nachmischkammer bereits vorgemischtes Produkt eingeleitet.

Mit der Erfindung soll eine Mischvorrichtung der eingangs genannten Art geschaffen werden, die auch unter kritischen Bedingungen für eine gute Mischgüte sorgt, und die außerdem, falls erforderlich, leicht gereinigt werden kann.

Diese Aufgabe wird dadurch gelöst, daß der Hohlkolben drehbar ist und seine Stirnfläche zur Mischung der Komponenten mit der angußseitigen Mischkammerwand einen veränderbaren Scherspalt bildet.

Erfindungsgemäß erfolgt die Vermischung der Komponenten durch die Relativbewegung der den Scherspalt bildenden Flächen, wobei die Mischgüte durch die Wahl des Anstellwinkels dieser paßförmigen Flächen gegenüber der Kolbenachse, durch die Spaltweite sowie durch die Winkelgeschwindigkeit des Hohlkolbens variiert werden kann. Die Reinigung der Mischkammer wird dadurch vorgenommen, daß die Stirnfläche des rotierenden Hohlkolbens gegen die Mischkammerwand im Bereich der Austrittsöffnung gepreßt wird, und die von den Flächen abgeriebenen Gemischreste von dem Ausstoßkolben aus dem zylinderförmigen Auslaufrohr ausgetragen werden.

Die Mischvorrichtung nach der Erfindung kann sehr unterschiedlich gestaltet und in sehr unterschiedlicher Weise eingesetzt werden. So ist es möglich, die den Scherspalt bildenden Flächen insgesamt nicht-eben und zumindest angenähert komplementär zueinander auszubilden. Damit läßt sich eine vorlauf- und nachlauffreie, besonders intensive Vermischung der Komponenten erreichen, da die mehrfache Umlenkung des Komponentengemischs zu einem weitgehend laminaren, ruhigen Strömungsverhalten des Gemischstroms führt.

In besonders vorteilhafter Weise läßt sich die Mischvorrichtung nach der Erfindung mit einem an sich bekannten Injektionsmischer kombinieren, der der Mischvorrichtung nach der Erfindung vorgeschaltet ist. Dieser Injektionsmischer kann einen Kolben aufweisen, der sicher für eine mechanische Zwangsreinigung sorgt. Die diesem Injektionsmischer nachgeschaltete Mischvorrichtung mit drehbarem Hohlkolben sorgt für eine noch bessere Mischungsintensität, insbesondere bei hohen Anforderungen und kritischen Produkten, beispielsweise füllstoffhaltigen Polyurethanen.

Weitere Vorteile und Einzelheiten der Erfindung werden unter Hinweis auf die Zeichnungen anhand zweier Ausführungsbeispiele näher erläutert.

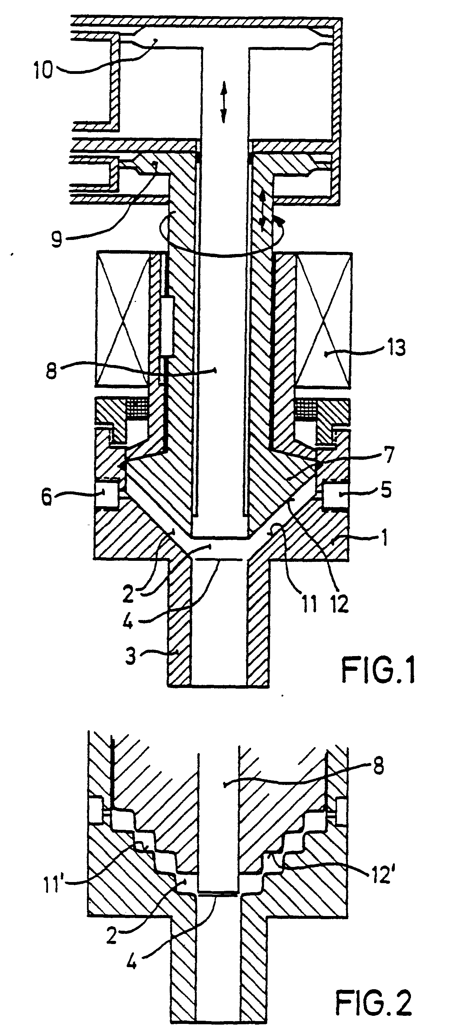

Gemäß Fig. 1 besteht die Mischvorrichtung aus einem Gehäuse 1, in dem eine Mischkammer 2 ausgebildet ist. An die Mischkammer schließt sich ein Auslaufrohr 3 an. Die Austrittsöffnung der Mischkammer ist mit 4 bezeichnet. In die Mischkammer führen Vorlaufleitungen über Eintrittsöffnungen 5 und 6.

In der Mischkammer 2 ist ein Hohlkolben 7 drehbar angeordnet, der einen Ausstoßkolben 8 enthält. Dieser Ausstoßkolben stimmt in seinen Abmessungen mit dem Auslaufrohr 3 überein und fluchtet mit diesem. Hohlkolben und Ausstoßkolben sind unabhängig voneinander über hydraulische Kolben 9 bzw. 10 hin- und herbewegbar.

Die angußseitige Mischkammerwand 11 bildet in etwa eine Kegelstumpffläche aus, die zur Austrittsöffnung 4 hin gleichmäßig geneigt verläuft. Der Neigungswinkel zur Längsachse des Hohlkolbens 7 liegt zwischen 0 und 90°. Die andere Mischkammerwand wird durch die Stirnfläche 12 des Hohlkolbens gebildet, der in die Mischkammer 2 bis zu deren Austrittsöffnung einschiebbar und gegenüber der Mantelfläche der Mischkammer abgedichtet ist. Dabei entsteht zwischen den Flächen 11 und 12 ein Scherspalt, in den die flüssigen Komponenten eingespritzt werden. Für eine Umlenkung, d. h. Drosselung der Komponenten bzw. des Gemischstromes können die den Scherspalt bildenden paßförmigen Flächen 11' und 12' ein Profil aufweisen (Fig. 2).

Im Betrieb erfolgt solange eine Mischung der mit Druck durch die Öffnungen 5 und 6 eingespritzten Komponenten in der Mischkammer 2, wie der Hohlkolben 7 den Eintritt zuläßt. Der Ausstoßkolben 8 kann hierbei zur Drosselung des Zulaufs des Komponentengemischs zur Austrittsöffnung 4 an dieser mit einstellbarem axialem Abstand herangefahren werden. Wenn ein Mischvorgang beendet werden soll, wird der von der Einrichtung 13 angetriebene, rotierende Hohlkolben nach unten bewegt, so daß die Eintrittsöffnungen 5 und 6 verschlossen werden, wobei gleichzeitig ein mechanisches Zwangsreinigen der Mischkammer 2 durch Ausschieben eventueller Gemischreste erfolgt. Der Ausstoßkolben 8 sorgt dann während seiner Bewegung durch das Auslaufrohr 3 für eine endgültige Reinigung.

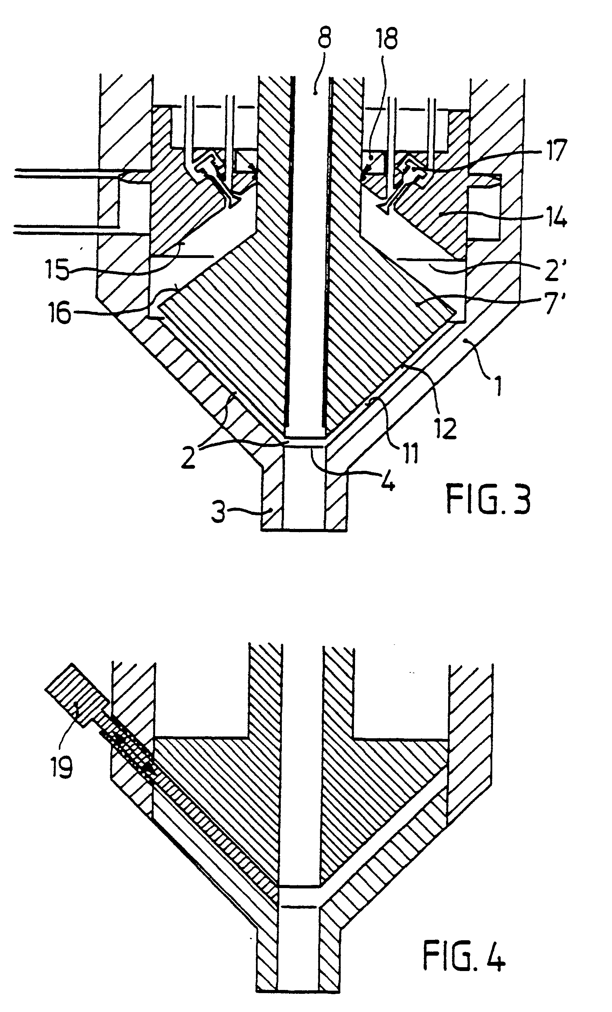

Die Ausführungsform nach Fig. 3 ist mit einem drehbaren Hohlkolben 7 versehen, der im Bereich der Mischzone einen Doppelkonus aufweist. Die hintere Mischkammerwand 15 bildet dabei ein in axialer Richtung verschiebbarer Kolben 14, dessen dem Hohlkolben gegenüberliegende Fläche 15 annähernd komplementär zur hinteren Fläche 16 des Hohlkolbens ausgebildet ist. Der Kolben 14 enthält die Vorlaufleitungen und die Rücklaufleitungen für die einzelnen Komponenten.

Die Ausgestaltung des Hohlkolbens 7 und der zusätzliche Kolben 14 ermöglichen insbesondere die Verarbeitung füllstoffhaltiger Komponenten. Hierfür können die Mischräume 2 und 2', die von den Flächen 11 und 12 bzw. von den Flächen 15 und 16 begrenzt werden, ihrer Größe nach durch Einstellen entsprechender Spaltweiten unabhängig voneinander variiert werden, da die Stellung des Hohlkolbens gegenüber der Mischkammerwand unabhängig von seiner Stellung gegenüber der Position des Kolbens 14 eingestellt werden kann. Es hat sich gezeigt, daß die Vermischung der Komponenten dann am vorteilhaftesten erfolgt, wenn beide Spaltweiten nicht gleich, sondern die hintere Spaltweite der Kammer 2' größer gewählt wird als die der Kammer 2. Die Mischvorrichtung kann dann bei getrennter Zuführung der Komponenten mit wesentlich geringeren Drehzahlen bei gleicher Mischgüte betrieben werden.

Dies wirkt sich auch auf die Auswahl der Dichtung 18 der Welle gegenüber den Komponenten aus, da sich aufgrund der geringeren Drehzahlen und des kleineren Radius der Welle niedrigere Umfangsgeschwindigkeiten ergeben.

Die Reinigung bzw. das Schließen des Mischsystems erfolgt in der Weise, daß der Kolben 14 hydraulisch gegen den Hohlkolben 7 gefahren wird, wobei das im Mischraum 2' befindliche Gemisch in den Mischraum 2 gepreßt wird. Dieser Reinigungsvorgang wird durch die Rotationsbewegung des Hohlkolbens unterstützt. Vor der letzten Phase dieses Vorgangs sind dabei die Komponentenventile 17 geschlossen, so daß durch den beim Zurückfahren des Kolbens 14 entstehenden Rückstau kein Reaktionsgemisch in die Ventile einströmen kann. Die Ventile 17 besitzen vorzugsweise eine kegelige Form, die ein selbsttätiges Schließen unterstützt, wobei der Schließvorgang durch Änderung des Komponentendrucks in der Vorlaufleitung bewirkt wird.

Die zweite Phase des Schließvorgangs kann nun ohne Rotation des Hohlkolbens 7 erfolgen, da das im Mischraum 2 befindliche Gemisch bereits ausreichend homogenisiert ist, so daß beim Auspressen in das Auslaufrohr 3 durch die nun gemeinsame Bewegung der Kolben in Richtung auf die angußseitige Mischkammerwand 11 kein Nachlauf entsteht. Die Reinigung des Auslaufrohres erfolgt durch die Hubbewegung des Ausstoßkolbens 8.

Die Öffnungsbewegung erfolgt in der Weise, daß zuerst die Spaltweite des Mischraumes 2 eingestellt wird, während die Komponentenventile noch geschlossen sind. Die Komponentenzufuhr erfolgt, nachdem die Rotationsbewegung des Hohlkolbens eingesetzt hat, während des Zurückfahrens des Kolbens 14. Auf diese Weise wird durch das gleichmäßige Füllen des Mischraums 2' vermieden, daß Luft eingemischt wird, bzw. ein unerwünschter Vorlauf entsteht. Die Rotation des Hohlkolbens 7' bewirkt ein gleichmäßiges Füllen des Mischraums 2 sowie eine ausreichende Homogenisierung der einströmenden Komponenten.

Bei der Verarbeitung von Komponenten, die aufgrund starker Adhäsionskräfte besonders gut an den den Scherspalt bildenden Metallflächen anhaften, so daß eine vollständige Reinigung dieser Flächen nicht mehr gegeben ist, können die Flächen mit Hilfe von in die Mischkammer einschiebbaren Schneidwerkzeugen 19, beispielsweise im Abstand von mehreren Zyklen oder vor dem Abschalten der Mischvorrichtung, von Gemischresten befreit werden (Fig. 4).

Die erfindungsgemäßen Mischvorrichtungen eignen sich in vorteilhafter Weise für die Herstellung füllstoffhaltiger Kunststoffe. Die können dabei unmittelbar in die Scherspalte eingebracht werden. Ein Vorvermischen der Feststoffe mit einer der Kunststoffkomponenten erübrigt sich. Bei entsprechend fester Konsistenz unterstützen die beim Zusammenpressen der Kolben eingeschlossenen Feststoffe den Reinigungsvorgang dadurch, daß von den vorangegangenen Takten verbliebene Gemischreste abgerieben werden.

**Patentansprüche**

1. Mischvorrichtung für die Herstellung eines chemisch reaktionsfähigen Gemisches aus mindestens zwei flüssigen Kunststoffkomponenten mit einer Mischkammer 2, die Eintrittsöffnungen 5 und 6 für die einzelnen Komponenten und eine Austrittsöffnung 4 für das Komponentengemisch besitzt, sowie mit einem Steuerorgan, das zwischen einer die Eintrittsöffnungen offenlassenden Stellung und einer die Eintrittsöffnungen zur Mischkammer absperrenden Stellung hin- und herbewegbar ist, wobei das Steuerorgan als ein einen unabhängig steuerbaren Ausstoßkolben 8 enthaltender Hohlkolben 7 ausgebildet ist, dessen der Mischkammer zugekehrte Stirnfläche 12 die der Austrittsöffnung gegenüberliegende Mischkammerwand bildet, wobei sich an die Austrittsöffnung ein Auslaufrohr 3 mit gegenüber dem Mischkammerquerschnitt geringerem Querschnitt anschließt, durch das der mit gleichem Querschnitt ausgebildete Ausstoßkolben hindurchbewegbar ist, dadurch gekennzeichnet, daß der Hohlkolben (7) drehbar ist und seine Stirnfläche (12) zur Mischung der Komponenten mit der angußseitigen Mischkammerwand (11) einen veränderbaren Scherspalt bildet.

2. Mischvorrichtung nach Anspruch 1, dadurch gekennzeichnet, daß die den Scherspalt bildenden Flächen (11′, 12′) insgesamt nicht-eben und zumindest annähernd komplementär zueinander ausgebildet sind.

3. Mischvorrichtung nach den Ansprüchen 1 und 2, dadurch gekennzeichnet, daß der Hohlkolben (7′) einen Doppelkonus aufweist.

4. Mischvorrichtung nach den Ansprüchen 1 bis 3, dadurch gekennzeichnet, daß die hintere Mischkammerwand (15) durch einen axial verschiebbaren Kolben (14) gebildet ist.

5. Mischvorrichtung nach den Ansprüchen 1 bis 4, dadurch gekennzeichnet, daß der Mischkammer (2) eine weitere Mischeinrichtung vorgeschaltet ist.

6. Mischvorrichtung nach Anspruch 5, dadurch gekennzeichnet, daß die vorgeschaltete Mischeinrichtung ein Injektionsmischer ist.

**Claims**

1. A mixing apparatus for the preparation of a chemically reactive mixture of two or more liquid plastics components, comprising a mixing chamber 2, which possesses inlet orifices 5 and 6 for the individual components and an outlet orifice 4 for the component mixture, as well as a control member which can be moved to and fro between a position which leaves the inlet orifices open and a position which shuts off the inlet orifices to the mixing chamber, the control member being constructed as a hollow piston 7 containing an independently controllable expulsion piston 8, the end face 12, facing the mixing chamber, of the hollow piston forming the mixing chamber wall opposite the outlet orifice and the outlet orifice being followed by an outlet tube 3 of lower cross-section than that of the mixing chamber, through which tube the expulsion piston, having the same cross-section as the outlet tube, can be passed, wherein the hollow piston (7) is rotatable and its end face (12) forms a variable shearing gap with the mixing chamber wall (11) nearest the sprue, the gap serving to mix the components.

2. A mixing apparatus as claimed in claim 1, wherein the surfaces (11′, 12′) which form the shearing gap are in total non-planar and are at least approximately complementary to one another.

3. A mixing apparatus as claimed in either of claims 1 and 2, wherein the hollow piston (7′) has a double cone.

4. A mixing apparatus as claimed in any of claims 1 to 3, wherein the rear mixing chamber wall (15) is formed by an axially movable piston (14).

5. A mixing apparatus as claimed in any of claims 1 to 4, wherein a further mixing device is placed upstream of the mixing chamber (2).

6. A mixing apparatus as claimed in claim 5, wherein the upstream mixing device is an injection mixer.

**Revendications**

1. Appareil mélangeur pour la préparation d'un mélange réactif chimiquement d'au moins deux composants de matière plastique liquides, ayant une chambre de mélange 2, qui présente des orifices d'entrée 5 et 6 pour les différents composants et un orifice de sortie 4 pour le mélange de composants, ainsi qu'un organe de commande qui peut se déplacer alternativement entre une position laissant ouverts les orifices d'entrée et une position obturant les orifices d'entrée vers la chambre de mélange, l'organe de commande étant constitué par un piston creux 7, contenant un piston éjecteur 8 commandable indépendamment, et dont la surface frontale 12, tournée vers la chambre de mélange, forme la paroi de chambre de mélange faisant face à l'orifice de sortie, un tube d'évacuation (3), de section plus faible que la section de chambre de mélange, se raccordant à l'orifice de sortie et à travers lequel peut passer le piston éjecteur formé avec la même section, caractérisé par le fait que le piston (7) creux est tournant et sa surface frontale (12) forme, avec la paroi de chambre de mélange (11) côté carotte, un interstice de cisaillement variable, pour le mélange des composants.

2. Appareil mélangeur selon la revendication 1, caractérisé par le fait que les surfaces (11', 12') formant l'interstice de cisaillement sont, globalement non planes et, au moins approximativement, complémentaires l'une de l'autre.

3. Appareil mélangeur selon les revendications 1 et 2, caractérisé par le fait que le piston creux (7') présente un cône double.

4. Appareil mélangeur selon les revendications 1 à 3, caractérisé par le fait que la paroi arrière de la chambre de mélange (15) est formée par un piston (14) déplaçable axialement.

5. Appareil mélangeur selon les revendications 1 à 4, caractérisé par le fait qu'en amont de la chambre de mélange (2) est montée un autre moyen de mélange.

6. Appareil selon la revendication 5, caractérisé par le fait que le moyen de mélange monté en amont est un mélangeur à injection.

FIG.1

FIG.2

FIG. 3

FIG. 4

2